# EUROPÄISCHE PATENTANMELDUNG

(11) **EP 1 215 602 A2**
(43) Veröffentlichungstag der Anmeldung: **19.06.2002**
(21) Anmeldenummer: 01125498.4
(22) Anmeldetag: 07.11.2001
(51) Int. Cl.: G06F 17/60

(54) **Verfahren zum Bereitstellen von Zweckinformationen eines Dienstanbieters an Dienstnutzer**

(30) Priorität: 13.11.2000 DE 10056209
(71) Anmelder: Deutsches Zentrum für Luft- und Raumfahrt e.V., 51147 Köln (DE)
(72) Erfinder: Angermann, Michael, Dipl.-Ing., 82166 Gräfelfing (DE); Steingass, Alexander, Dipl.-Ing., 82205 Gilching (DE); Robertson, Patrick, Dr., 82541 Ammerland (DE)
(74) Vertreter: von Kirschbaum, Albrecht, Dipl.-Ing.

(57) **Zusammenfassung**

Beim erfindungsgemäßen Verfahren zur Bereitstellung von Zwekkinformationen, z.B. von Reise-, Buchungs- oder Zahlungsinformationen sowie von deren jeweiligen Vorgängen, eines Diensteanbieters (A) an Dienstenutzer (N) unter Verwendung einer elektronischen Datenverarbeitung (EDV) stellt der Diensteanbieter, welcher als eine Software auf einem EDV-Gerät mit Kommunikationsfähigkeit ausgeprägt ist, mittels Helferdiensten einem Dienstenutzer, welcher als eine Software auf einem EDV-Gerät mit Kommunikationsfähigkeit ausgeprägt ist, Algorithmen und/oder Algorithmenaufrufe und/oder Informationen zur Verfügung. Diese Algorithmen und/oder Algorithmenaufrufe und/oder Informationen bewirken beim Dienstenutzer ein Abrufen von Bedarfsinformationen, welche auf einem dem betreffenden Dienstenutzer zugeordneten EDV-Gerät gespeichert sind. Diese Bedarfsinformationen steuern den weiteren Ablauf der Algorithmen und/oder Algorithmenaufrufen. Diese Algorithmen und/oder Algorithmenaufrufe und/oder Informationen veranlassen beim Dienstenutzer einen Zugewinn an Zweckinformation und/oder das Auslösen eines oder mehrerer zur Bereitstellung von Zweckinformationen, also z.B. von Reise-, Buchungs- oder Zahlungsinformationen und von deren jeweiligen Vorgängen, notwendiger Prozesse. Das Verfahren nach der Erfindung läßt sich z.B. bei Reisebegleitsystemen verwenden.

## Beschreibung

Die Erfindung betrifft ein Verfahren zur Bereitstellung von Zweckinformationen, z.B. von Reise-, Buchungs- oder Zahlungsinformationen sowie von deren jeweiligen Vorgängen, eines Diensteanbieters an Dienstenutzer unter Verwendung einer elektronischen Datenverarbeitung (EDV).

Bei der Bereitstellung von Reiseinformationsdienstleistungen, Bezahlungsdienstleistungen und ähnlichen Dienstleistungen per EDV-Anlage tritt das Problem auf, daß Dienstenutzer, z.B. eine Software auf einem Notebook-Rechner eines Reisenden, und Diensteanbieter, z.B. die Software auf einem Rechnerserver einer Fluggesellschaft, sich über die genaue Art der Dienstleistung einig sein müssen. So muß beispielsweise der Dienstenutzer, im Beispiel also der Notebook-Rechner des Reisekunden, genau wissen, in welchem Format er die Anfrage "Gibt es von MUC nach CDG am 18.5.2001 ab 19.15 Uhr die Möglichkeit eines Fluges, der nicht nach 21.25 Uhr ankommt?" an den Diensteanbieter, im Beispiel also den Rechnerserver der Fluggesellschaft, richten muß.

Bisher wird dies durch Definition einer API-Schnittstelle (Application Programming Interface) bewerkstelligt, welche Parameter und Nutzungsregeln einer Anzahl von Diensteaufrufen spezifiziert und dokumentiert. Dies bedarf eines außerordentlichen Standardisierungsaufwandes und führt zu einer langen Liste von Diensten, die jeweils bei Diensteanbietern implementiert sein müssen. Für diesen Sachverhalt besteht der Fachterminus: "Die API-Schnittstelle muß implementiert sein". Die Dienstenutzer müssen, um möglichst in den vollen Genuß aller zur Verfügung stehenden Dienste zu kommen, ebenfalls ein breites Spektrum an API-Aufrufen benutzen können.

Sowohl die Programmierer von Software-Diensten als auch die Programmierer von dienstenutzenden Software-Modulen müssen das API kennen. Neue Dienste wären aus technischen Gründen nur schlecht einführbar, weil sie diesem Standardisierungsverfahren unterworfen wären. Ferner wären diese Liste der Diensteaufrufe sowie die dazugehörigen Parameter und Nutzungsregeln (API) sehr lang und umfangreich und würden die Speicherkapazität von EDV-Geräten stark belasten. Auch die oft zu wiederholende Aktualisierung brächte eine Reihe von technischen Problemen nach sich, z.B. im Hinblick auf die Datenübertragungsmenge und die Versionskontrolle.

Aufgabe der Erfindung ist es, ein flexibleres Verfahren zur Bereitstellung von Diensten eines Diensteanbieters zu schaffen, so daß es möglich wird, die Fähigkeiten des Anbietens auszubauen, ohne daß die Dienstenutzer die neuen Fähigkeiten im voraus kennen müssen und ohne daß eine die Programmierung betreffende Abstimmung zwischen Diensteanbieter und Dienstenutzern und damit ein hoher Standardisierungsaufwand erforderlich werden.

Gemäß der Erfindung, die sich auf ein Verfahren der eingangs genannten Art bezieht, wird diese Aufgabe dadurch gelöst, daß der Diensteanbieter, welcher als eine Software auf einem EDV-Gerät mit Kommunikationsfähigkeit ausgeprägt ist, mittels Helferdiensten einem Dienstenutzer, welcher als eine Software auf einem EDV-Gerät mit Kommunikationsfähigkeit ausgeprägt ist, Algorithmen und/oder Algorithmenaufrufe und/oder Informationen zur Verfügung stellt, daß diese Algorithmen und/oder Algorithmenaufrufe und/oder Informationen beim Dienstenutzer ein Abrufen von Bedarfsinformationen bewirken, welche auf einem dem betreffenden Dienstenutzer zugeordneten EDV-Gerät gespeichert sind, daß diese Bedarfsinformationen den weiteren Ablauf der Algorithmen und/oder Algorithmenaufrufe steuern und daß diese Algorithmen und/oder Algorithmenaufrufe und/oder Informationen beim Dienstenutzer einen Zugewinn an Zweckinformation und/oder das Auslösen eines oder mehrerer zur Bereitstellung von Zweckinformationen, also z.B. von Reise-, Buchungs- oder Zahlungsinformationen und von deren jeweiligen Vorgängen, notwendiger Prozesse veranlassen.

Das Verfahren nach der Erfindung bietet den Vorteil, daß durch die Verwendung der Helferdienste die Fähigkeit der Diensteanbieter in der Zukunft ausbaubar ist, obwohl die Nutzer der Diensteanbieter nicht unbedingt diese Fähigkeiten im voraus kennen müssen. Die Helferdienste beschreiben einen Dienst auf einem höheren Abstraktionsniveau, als es klassische API-Aufrufe tun.

In vorteilhafter Weise nimmt der Diensteanbieter an einem Look-Up-Verfahren teil und trägt dort ihm zugeordnete Helferdienste ein.

Es ist zweckmäßig, wenn die Algorithmen und/oder Algorithmenaufrufe und/oder Informationen die Steuerung des Diensteanbieters übernehmen, vorzugsweise durch Kommunikation mit dem Diensteanbieter.

Die Informationen des Diensteanbieters werden in zweckmäßiger Weise den Dienstenutzern über Baken angeboten, mit welchen ein Dienstenutzer mit Hilfe eines mobilen Geräts drahtlos mittels Funk-, Infrarot- oder Ultraschallsignalen oder drahtgebunden kommunizieren kann.

Die Helferdienste, die von der Bake angeboten werden, können als solche Dienste beschrieben, ausgeführt und bezeichnet werden, die einen Weg zu einem Ziel und/oder Zwischenziel beschreiben.

Die angebotenen Helferdienste lassen sich auch als Dienste beschreiben, ausführen und bezeichnen, welche Status-Informationen beim Dienstenutzer verändern und aktualisieren.

Die von den Algorithmen veränderbaren Informationen können die von einer reisenden Person zu nehmende/n Wegroute/n, Karten, Ankunftszeiten von Fahrzeugen (Taxi, Bus, Bahn usw.), in denen sich ein mobiles Gerät befindet, die aktuelle Position der Bake oder des mobilen Geräts, Fahrpläne und Routen von Verkehrsmitteln oder Hinweise zu Veranstaltungen, Restaurants und Hotels in der Umgebung, zu Touristeninformationen, Fremdenverkehrsämtern, Tankstellen, Geschäften, Ämtern, Krankenhäusern und dergleichen sein.

Eine vorteilhafte Weiterbildung des Verfahrens nach der Erfindung besteht darin, daß das vorgesehene Look-Up-Verfahren mittels eines Betriebssystem mit standardisierter Architektur, insbesondere entsprechend der JINI™-Technologie, arbeitet, die es ermöglicht, einen Anbieter von Diensten mit Teilnehmern über ein gemeinsames Netzwerk zu koppeln.

Die Verteilung der Algorithmen und/oder Algorithmenaufrufe und/oder Informationen auf verschiedene Recheneinheiten, d.h. beispielsweise das EDV-Gerät des Diensteanbieters oder das EDV-Gerät des Dienstenutzers, kann mittels RMI (Remote Method Invocation), z.B. von JAVA™, oder beispielsweise mittels JINI™ vorgenommen werden. Diese Algorithmen müssen also nicht ausschließlich auf dem mobilen Gerät ablaufen, sondern können auf der Bake und/oder mit dieser verbundenen weiteren Recheneinheiten und mobilen Geräten verteilt ablaufen. Im extremen Fall wird der Algorithmus nur vom mobilen Gerät gestartet und läuft dann nicht mehr auf diesem.

Zentraler Bestandteil des Verfahrens nach der Erfindung ist ein sogenanntes Status-Objekt, das sowohl die Nutzerdaten als auch die Historiendaten und Wünsche (Optionen) des Nutzers enthält. Nach der Erfindung wird ein Mechanismus, d.h. ein Verfahren benutzt, um zukünftige, also im Augenblick noch unbekannte Dienste in einen allgemeinen Rahmen unterzubringen, ohne beim Hinzukommen neuer Dienste das API ändern zu müssen. Hierzu wird also ein allgemeiner Dienst definiert, der als Helferdienst bezeichnet wird, vom Diensteanbieter angeboten wird und in der Lage ist, beim Dienstenutzer etwas Nützliches zu verrichten, ohne daß der Dienstenutzer von den Fähigkeiten und Formalien im Sinne des klassischen API etwas wissen muß. Das Verfahren wird nachfolgend im einzelnen beschrieben:
- Der Diensteanbieter kann seinen Dienst oder seine Dienste über ein Look-Up-Verfahren bei einen Look-Up-Dienst eintragen, zusammen mit allen Informationen und Algorithmen, die zur Nutzung der Dienste des Dienstes notwendig sind.
- Dieser Look-Up-Dienst ist wiederum ein Algorithmus, der frei wählbar auf dem EDV-Gerät des Dienstenutzers oder des Diensteanbieters oder auf einer weiteren EDV-Anlage ausgeführt werden kann.
- Alternativ zu diesem Look-Up-Verfahren kann der Dienstenutzer auch direkt das Diensteangebot des Diensteanbieters in Erfahrung bringen, z.B. durch direkte Anfrage beim Diensteanbieter nach einer angebotenen Diensteliste, oder per Definition annehmen, daß ein Diensteanbieter einen ganz bestimmten Dienst anbietet. Wenn der Dienstenutzer auf diesem Wege einen Dienst ausgesucht hat, kann er alle Informationen und Algorithmen, die zur Nutzung der Dienste des Dienstes notwendig sind, vom Diensteanbieter anfordern.
- Diese Informationen und Algorithmen, die zur Nutzung der Dienste des Diensteanbieters notwendig sind, können Algorithmen und zugehörige Daten sein, welche auf dem EDV-Gerät des Dienstenutzers als Algorithmus ablaufen und von dort die notwendigen Kommunikationsanfragen an den Diensteanbieter steuern. Diese Algorithmen und zugehörigen Daten sind diensteanbieterspezifisch, denn sie implizieren Fähigkeiten der Diensteanbieter, die jedoch dem Dienstenutzer nicht, weder teilweise noch vollständig, bekannt sein müssen.
- Diese Algorithmen und zugehörigen Daten sind in der Lage, Informationen, die auf dem EDV-Gerät des Dienstenutzers gespeichert oder dort verfügbar sind, oder Dienste, die dem Dienstenutzer zur Verfügung stehen, z.B. Kommunikationsdienste, zu erkennen und/oder zu bearbeiten und/oder zu benutzen. Dies setzt eine gewisse Standardisierung dieser Informationen voraus. Diese Informationen können physikalisch im Speicher des EDV-Geräts des Dienstenutzers oder in einer mit dieser verbundenen weiteren EDV-Einheit stehen.
- Diese Algorithmen müssen physikalisch nicht ausschließlich auf dem EDV-Gerät des Dienstenutzers ablaufen, sondern können auf dem EDV-Gerät des Dienstenutzers und/oder mit ihm verbundenen weiteren Recheneinheiten und EDV-Geräten des Diensteanbieters verteilt ablaufen. Die Verwaltung dieser Aufteilung kann mittels RMI (Remote Method Invocation) beispielsweise von JAVA™ oder z.B. mittels Jini™ durchgeführt und überwacht werden.
- Die vom Diensteanbieter angebotenen Dienste sind auf einem hohen Abstraktionsniveau definiert und werden hier als Helferdienste bezeichnet. Beispielhafte Namen solcher hochabstrahierter Helferdienste können sein: "Zeige den Weg an das Ziel, welches im EDV-Gerät des Dienstenutzers gespeichert ist" oder "Ergänze den Status des Dienstenutzers" oder einfach "Helfe". Eine diesbezügliche Erläuterung anhand von Beispielen ist in einem noch nachfolgenden Teil der Beschreibung des Verfahrens nach der Erfindung enthalten. Diese Helferdienste werden von Anfang an namentlich definiert, nicht jedoch ihre genaue Realisierung und Verwendung, und nicht zwingend ihr Zweck.
- Die Dienstenutzer, welche die Dienste nutzen wollen, müssen nur in der Lage sein, die entsprechenden Look-Up-Dienste zu finden, um die dort eingetragenen Dienste in Anspruch zu nehmen, d.h. die dort eingetragenen Helferdienste interpretieren zu können.

Es folgen nun Beispiele für einen Helferdienst "Zeige den Weg an das Ziel, welches im EDV-Gerät des Dienstenutzers gespeichert ist".

Der Helferdienst "Zeige den Weg an das Ziel, welches im EDV-Gerät des Dienstenutzers gespeichert ist" kann folgendermaßen in einer Analogie verstanden werden: Man stelle sich vor, eine Person fragt in einer fremden Stadt einen ortskundigen Menschen nach dem besten Weg zum Flughafen. Eine solche Fragestellung ist besser als diesen Menschen nach dem Aufenthaltsort zu fragen, um dann selbständig die weiteren Schritte zu bestimmen. Es könnte nämlich sein, daß die ortskundige Person über einen Busservice zum Flughafen Bescheid weiß.

Als Helferdienst soll der Dienst "Zeige den Weg an das Ziel, welches im mobilen Gerät gespeichert ist" dienen. Dieser Dienst wird vom Diensteanbieter bei einem Look-Up-Dienst eingetragen, zusammen mit einem Algorithmus, der vom Dienstenutzer, hier in diesem Beispiel einem Mobiltelephon, ausgeführt werden kann. Dieser Algorithmus sucht nun auf dem Mobiltelephon nach einem dort eingetragenem Ziel, z.B. nach dem Reiseziel der Nutzerperson des Mobiltelephons, oder nach einem auf dem Wege dahin zu erreichenden Zwischenziel, welches dem Helferdienst "Zeige den Weg an das Ziel, welches im EDV-Gerät des Dienstenutzers gespeichert ist" bekannt ist.

Das Ziel ist in einer dem Diensteanbieter bekannten Art und Weise gespeichert und repräsentiert, z.B. in einer Speicherzelle mit dem Namen "Destination". Ebenso können die Zwischenziele als Liste oder Feld im Speicher stehen, beispielsweise mit einem Namen wie "IntermediateDestinationList". Der Algorithmus kann nun mit dem Diensteanbieter in Verbindung treten und von diesem die notwendigen Informationen zum Erreichen des (Zwischen-)Ziels einholen. Dies kann z.B. eine Wegbeschreibung und/oder eine Karte sein.

Es folgt nun ein Beispiel für einen Helferdienst "Helfe":

Als Helferdienst soll hierbei also der Dienst "Helfe" dienen. Dieser Dienst wird von einem Diensteanbieter bei einem Look-Up-Dienst eingetragen, zusammen mit einem Algorithmus der von dem Dienstenutzer, in diesem Beispiel einem mobilen Gerät, welches als ein Mobiltelephon realisiert ist, ausgeführt werden kann. Dieser Algorithmus sucht nun auf dem Mobiltelephon nach einem dort gespeicherten Status-Objekt, welches den Status des Nutzers repräsentiert. Dies können z.B. die aktuelle Position, eine topologische Repräsentation des geplanten Ziels sowie des Weges dorthin und die dafür vorgesehenen Verkehrsmittel sein.

Das Status-Objekt repräsentiert in diesem Beispiel, daß der menschliche Nutzer von A nach C reisen möchte, und zwar per Bus von A nach B, und zu Fuß von B nach C, und ferner, wo sich der Nutzer gerade befindet, oder aber, daß dieser Ort unbekannt ist. Die Form des Status-Objekts ist dem Diensteanbieter bekannt und kann aus einem in der objektorientierten Programmierung bekannten Art und Weise geschehen, z.B. als vererbtes Objekt, dessen Datenfeldnamen, Schnittstellen und Methoden bekannt sind.

Der Algorithmus ist in der Lage, das Status-Objekt zu durchsuchen und die Einträge mit bestimmten, dem Algorithmus bekannten Feldern zu vergleichen. Dies kann z.B. durch lineares Durchsuchen der Status-Objekt-Inhalte oder durch Aufruf einer Methode des Status-Objekts geschehen, wobei die Parameter gleich den gesuchten Begriffen gesetzt sind. Hierbei ist die Methode des Status-Objekts als klassische Datenbankabfrage ausgeführt, wobei das Status-Objekt die Datenbank bildet und in der Datenbank (Status-Objekt) nach den ihr übermittelten Parametern (Suchbegriffe) gesucht wird.

Der Algorithmus, welcher vom Diensteanbieter übermittelt wurde, ist, wie vorstehend beispielhaft skizziert wurde, in der Lage, dieses Objekt mit seinen Inhalten und Eigenschaften zu erkennen. Insbesondere erkennt er die dem Diensteanbieter bekannten Ziele A, B und C in diesem Objekt und kommuniziert per Funk und/oder leitungsgebunden nun mit dem Diensteanbieter, um von ihm zu erfahren, daß es einen Bus direkt von A nach C gibt. Dies wird in dem Status-Objekt zusammen mit den Fahrzeiten des Busses auf dem Mobiltelephon vermerkt. Die entsprechenden Anweisungen werden dem Nutzer mitgeteilt.

Der verändernde Eingriff auf das Status-Objekt kann z.B. mittels Methodenaufruf des Status-Objekts geschehen, wobei die Parameter des Methodenaufrufs die Zieladresse und neue Inhalte des Status-Objekts beinhalten. Der verändernde Eingriff auf das Status-Objekt könnte auch durch direkten Schreibzugriff auf den Speicher, welcher das Status-Objekt hält, geschehen. Ein weniger leistungsfähiger Diensteanbieter hätte vielleicht nur die aktuelle Uhrzeit im Status-Objekt beim Mobiltelephon ergänzen können, da der entsprechende Algorithmus, welcher zum Diensteanbieter gehört, dazu fähig ist diesen Platzhalter, z.B. "Aktuelle_Uhrzeit" im Status-Objekt zu finden, und die aktuelle Uhrzeit dort einzutragen.

Falls der Algorithmus nicht auf dem Mobiltelephon ablaufen soll, können alternativ dazu das ganze Status-Objekt oder Teile hiervon auf das EDV-Gerät des Diensteanbieters ausgelagert werden, um dort ausgeführt zu werden.

Ferner kann das Status-Objekt ganz oder teilweise auf einer weiteren Recheneinheit gespeichert sein, mit der das Mobiltelephon in Verbindung steht.

In einer beigefügten Figur ist zum besseren Verständnis des Verfahrens nach der Erfindung ein anschauliches praktisches Beispiel dargestellt.

Beim dargestellten "Hilf mir!"-Konzept bittet ein Dienstenutzer N, z.B. ein speziell für eine derartige Dienstekommunikationsform ausgebildetes Mobiltelephon, mit der Formulierung "Hilf mir!" einen Diensteanbieter A, der z.B. mittels einer Funkbake erreichbar ist, um besondere Hilfestellung bei einem Reiseproblem. Der Diensteanbieter A antwortet mit der Frageformulierung "Wie kann ich helfen?" Daraufhin ergreift der Dienstenutzer N wieder die Initiative mit der Formulierung "Ich muß nach Timbuktu reisen."

Daraufhin erwidert der Diensteanbieter A mit der Formulierung "Es tut mir leid, ich kenne Timbuktu nicht, aber Sie könnten zum Flughafen fahren". Im Anschluß daran antwortet der Dienstenutzer N "Ich bin mit Flughafen einverstanden" und ergänzt hierzu noch sofort die Frage "Wie komme ich dort hin?" Der Diensteanbieter A gibt danach zur Auskunft "Nehmen Sie den Zug ....!" Daraufhin bedankt sich der Dienstenutzer N mit der Formulierung "Danke" und der Diensteanbieter A beendet das Hilfeverfahren mit der Formulierung "Bitte".

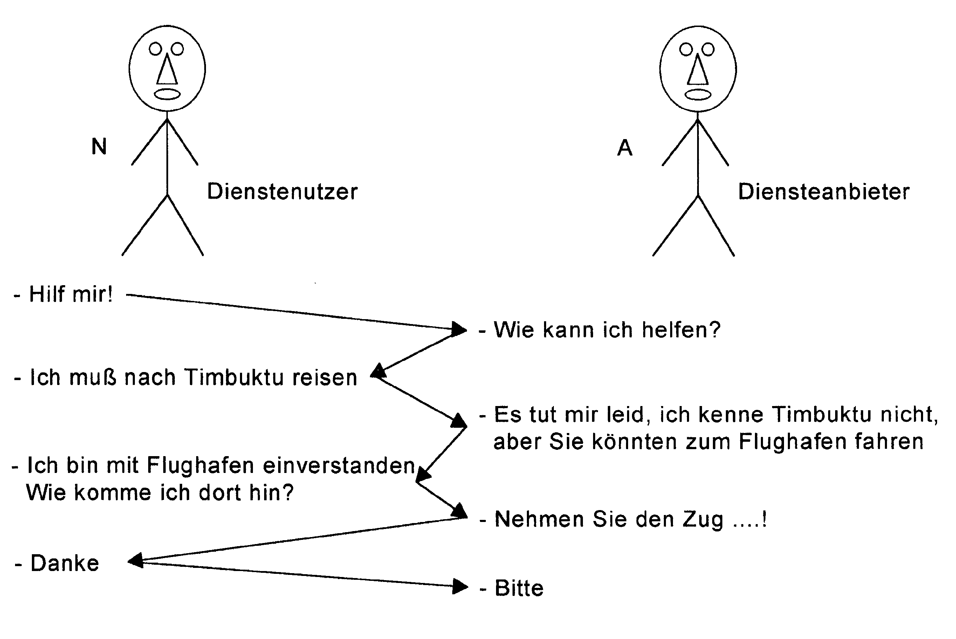

## Patentansprüche

1. Verfahren zur Bereitstellung von Zweckinformationen, z.B. von Reise-, Buchungs- oder Zahlungsinformationen sowie von deren jeweiligen Vorgängen, eines Diensteanbieters an Dienstenutzer unter Verwendung einer elektronischen Datenverarbeitung (EDV), **dadurch gekennzeichnet, daß** der Diensteanbieter (A), welcher als eine Software auf einem EDV-Gerät mit Kommunikationsfähigkeit ausgeprägt ist, mittels Helferdiensten einem Dienstenutzer (N), welcher als eine Software auf einem EDV-Gerät mit Kommunikationsfähigkeit ausgeprägt ist, Algorithmen und/oder Algorithmenaufrufe und/oder Informationen zur Verfügung stellt, daß diese Algorithmen und/oder Algorithmenaufrufe und/oder Informationen beim Dienstenutzer ein Abrufen von Bedarfsinformationen bewirken, welche auf einem dem betreffenden Dienstenutzer zugeordneten EDV-Gerät gespeichert sind, daß diese Bedarfsinformationen den weiteren Ablauf der Algorithmen und/oder Algorithmenaufrufe steuern und daß diese Algorithmen und/oder Algorithmenaufrufe und/oder Informationen beim Dienstenutzer einen Zugewinn an Zweckinformation und/oder das Auslösen eines oder mehrerer zur Bereitstellung von Zweckinformationen, also z.B. von Reise-, Buchungs- oder Zahlungsinformationen und von deren jeweiligen Vorgängen, notwendiger Prozesse veranlassen.

2. Verfahren nach Anspruch 1, **dadurch gekennzeichnet, daß** der Diensteanbieter (A) an einem Look-Up-Verfahren teilnimmt und dort ihm zugeordnete Helferdienste einträgt.

3. Verfahren nach Anspruch 1 oder 2, **dadurch gekennzeichnet, daß** die Algorithmen und/oder Algorithmenaufrufe und/oder Informationen die Steuerung des Diensteanbieters (A) übernehmen.

4. Verfahren nach Anspruch 3, **dadurch gekennzeichnet, daß** die Algorithmen und/oder Algorithmenaufrufe und/oder Informationen die Steuerung des Diensteanbieters (A) durch Kommunikation mit dem Diensteanbieter übernehmen.

5. Verfahren nach einem der vorhergehenden Ansprüche, **dadurch gekennzeichnet, daß** die Informationen des Diensteanbieters (A) den Dienstenutzern (N) über Baken angeboten werden, mit welchen ein Dienstenutzer mit Hilfe eines mobilen Geräts drahtlos mittels Funk-, Infrarot- oder Ultraschallsignalen oder drahtgebunden kommunizieren kann.

6. Verfahren nach Anspruch 5, **dadurch gekennzeichnet, daß** die Helferdienste, die von der Bake angeboten werden, als solche Dienste beschrieben, ausgeführt und bezeichnet werden können, die einen Weg zu einem Ziel und/oder Zwischenziel beschreiben.

7. Verfahren nach einem der Ansprüche 1 bis 5, **dadurch gekennzeichnet, daß** die Helferdienste, die angeboten werden, als Dienste beschrieben, ausgeführt und bezeichnet werden können, welche Status-Informationen beim Dienstenutzer (N) verändern und aktualisieren.

8. Verfahren nach einem der vorhergehenden Ansprüche unter Einschluß von Anspruch 5, **dadurch gekennzeichnet, daß** die von den Algorithmen veränderbaren Informationen die von einer reisenden Person zu nehmende/n Wegroute/n, Karten, Ankunftszeiten von Fahrzeugen (Taxi, Bus, Bahn usw.), in denen sich ein mobiles Gerät befindet, die aktuelle Position der Bake oder des mobilen Geräts, Fahrpläne und Routen von Verkehrsmitteln oder Hinweise zu Veranstaltungen, Restaurants und Hotels in der Umgebung, zu Touristeninformationen, Fremdenverkehrsämtern, Tankstellen, Geschäften, Ämtern, Krankenhäusern und dergleichen sind.

9. Verfahren nach einem der vorhergehenden Ansprüche unter Einschluß von Anspruch 2, **dadurch gekennzeichnet, daß** das Look-Up-Verfahren mittels eines Betriebssystem mit standardisierter Architektur, insbesondere entsprechend der JINI™-Technologie, arbeitet, die es ermöglicht, einen Anbieter von Diensten mit Teilnehmern über ein gemeinsames Netzwerk zu koppeln.

10. Verfahren nach einem der vorhergehenden Ansprüche, **dadurch gekennzeichnet, daß** die Verteilung der Algorithmen und/oder Algorithmenaufrufe und/oder Informationen auf verschiedene Recheneinheiten, d.h. beispielsweise das EDV-Gerät des Diensteanbieters (A) oder das EDV-Gerät des Dienstenutzers (N), mittels RMI (Remote Method Invocation), z.B. von JAVA™, oder beispielsweise mittels JINI™ vorgenommen wird.
